# EUROPÄISCHE PATENTSCHRIFT

(11) **EP 2 196 773 B1**
(45) Veröffentlichungstag und Bekanntmachung des Hinweises auf die Patenterteilung: **15.01.2014**
(21) Anmeldenummer: 09174726.1
(22) Anmeldetag: 02.11.2009
(51) Int. Cl.: G01C 21/36, B60W 30/08, B60W 30/06, B60W 50/08, B60K 35/00, B62D 15/02, G08G 1/16

(54) **Steuereinrichtung und Verfahren zur Erzeugung einer Anzeigendarstellung**
Control device and method for generating an image display
Dispositif de commande et procédé de production d'une représentation d'affichage

(30) Priorität: 15.12.2008 DE 102008054641
(43) Veröffentlichungstag der Anmeldung: 16.06.2010
(73) Patentinhaber: Robert Bosch GmbH, 70442 Stuttgart (DE)
(72) Erfinder: Mathony, Hans-Joerg, 71732 Tamm-Hohenstange (DE); Uhler, Werner, 76646 Bruchsal (DE)

(56) Entgegenhaltungen:
- EP-A1- 1 179 958
- WO-A1-2010/054736
- WO-A1-2010/054737
- WO-A2-99/06987
- DE-A1-102008 036 009

## Beschreibung

### Stand der Technik

Die Erfindung geht aus von einer Steuereinrichtung und einem Verfahren zur Erzeugung einer Anzeigendarstellung eines Fahrzeugs. Aus der EP 1152 218 A2 ist bereits eine Navigationseinrichtung bekannt, die dazu dient, eine Fahrtroute eines Fahrers zu einem Fahrziel zu bestimmen und dem Fahrer die Fahrtroute zur Verfügung zu stellen. Darüber hinaus werden auch Hindernisse vor dem Fahrzeug erfasst. Auf die Hindernisse bezogene Informationen werden an den Fahrer ausgegeben. Wird ein Hindernis erfasst, so wird automatisch eine Anzeigendarstellung gewählt, in der nicht nur die jeweilige bestimmte Route, sondern auch das entsprechende Hindernis dargestellt wird.

Aus der WO 99/06987 ist ein Steuer- und Verwaltungssystem für Kraftfahrzeuge bekannt, bei dem die Anzeige des Fahrzeugs auf verschiedene Weise genutzt werden kann. So können beispielsweise Zustandsgrößen des Fahrzeugs, Kartendaten und Fahrzeugfunktionen dargestellt werden. Die verschiedenen Fahrzeugsfunktionen sind über eine Bedienung von neben der Anzeige angeordnete Tastenfelder zugänglich.

Aus der EP 1179 958 A1 ist ein Bildverarbeitungssystem für ein Fahrzeug bekannt, bei dem aus verschiedenen, erfassten Kamerabildern eine virtuelle Ansicht des Fahrzeugs berechnet und in einer Anzeige dargestellt wird.

Aus der nachveröffentlichten WO 2010054736 A1 ist ein Kraftfahrzeugbediensystem bekannt, bei dem eine Steuereinrichtung derart eingerichtet und mit einem Navigationssystem, einem Fahrzeug-ÜberwachungsSystem, einer Anzeigeeinrichtung und einer Bedieneinrichtung gekoppelt ist, dass in einem Zoombetriebszustand auf der Anzeigeeinrichtung Straßenkarteninformatonen dargestellt werden, dass in einem Überwachungsbetriebszustand auf der Anzeigeeinrichtung Fahrzeuginformationen dargestellt werden und dass in einem Zoombetriebszustand durch mindestens eine vorgegebenen Zoom-Bedienaktion der Zoom-Faktor für die Anzeige der Straßenkarteninformation einstellbar ist und dass bei der Einstellung des Zoom-Faktors auf einen vorgegebenen Grenzwert auf den Überwachungsbetriebszustand umgeschaltet wird. Ferner kann auch ein Kraftfahrzeug-Graffkobjekt dargestellt werden.

Aus der nachveröffentlichten WO2010054737 A1 ist ein ähnliches Kraftfahrzeugbediensystem bekannt, bei dem, in Abhängigkeit von einem durch eine Zoom-Bedienaktion gewählten Maßstab, Informationen zu Fahrzeugfunktionen entsprechend einer Entfernung der jeweiligen Fahrzeugfunktion vom Zentrum des Kraftfahrzeugs in einer Anzeigedarstellung des Kraftfahrzeugs dargestellt werden.

### Offenbarung der Erfindung

### Vorteile der Erfindung

Die erfindungsgemäße Steuereinrichtung mit den Merkmalen des unabhängigen Anspruchs 1 erzeugt eine Anzeigendarstellung deren Maßstab durch einen Benutzer nach dessen Wunsch verändert werden kann. Ein Benutzer kann somit unabhängig davon, ob das Fahrzeugsystem ein für das Fahrzeug relevantes Hindernis erfasst, sich eine vergrößerte Darstellung des Fahrzeugs und der in der Umgebung des Fahrzeugs erfassten Hindernisse darstellen lassen. Eine entsprechende Änderung des Maßstabes ist beispielsweise für einen Einparkvorgang vorteilhaft, bei dem sich ein Fahrer über die Größe einer Parklücke informieren will und er somit eine Information über Hindernisse in der Umgebung des Fahrzeugs erfahren will, die nicht in seinem Fahrweg liegen. Ferner ist es damit auch möglich, das der Benutzer eine für ihn gewünschte Vergrößerung wählen kann, um sein Fahrverhalten möglichst optimal an die Umgebungssituation des Fahrzeugs anpassen zu können. Insbesondere bei Einparksituationen ist es gegebenenfalls möglich, eine Vergrößerung nur eines Teilbereichs eine Umgebung des Fahrzeugs vorzunehmen, um gerade diesen, für den Fahrer besonders relevanten Bereich, in der Anzeige besonders gut darzustellen.

Entsprechende Vorteile ergeben sich für das erfindungsgemäße Verfahren mit den Merkmalen des unabhängigen Anspruchs 3 zur Erzeugung einer Anzeigendarstellung eines Fahrzeugs.

Erfindungsgemäß werden, in Abhängigkeit von dem gewählten Maßstab Fahrzeugfunktionen, innerhalb einer Umrissdarstellung des Fahrzeugs, in der Anzeige dargestellt. Durch eine Änderung des Maßstabs ist damit eine besonders einfache Umschaltung von einer Darstellung des Fahrzeugs und Hindernissen in der Umgebung des Fahrzeugs einerseits und Fahrzeugfunktionen andererseits möglich. So kann es beispielsweise vorgesehen sein, eine Steuerung eines automatischen oder zumindest teilautomatischen Einparkvorgangs über eine Funktionsdarstellung vorzunehmen, die in eine Darstellung des Fahrzeugs zur Information über die Fahrzeugumgebung integriert ist. Sind Fahrzeugfunktionen, beispielsweise durch entsprechende Symbol- oder Textdarstellungen, in einer Umrissdarstellung des Fahrzeugs in einer entsprechenden Anzeigedarstellung des Fahrzeugs in seiner Umgebung integriert, ist eine besonders einfache, intuitive Bedienung der Fahrzeugfunktionen durch einen Benutzer möglich. Eine Ablenkung des Benutzers vom Fahrgeschehen wird hierdurch vermindert, so dass die Fahrsicherheit erhöht wird. Ferner wird ein Bedienungskomfort gesteigert, da auf intuitive Weise eine Überwachung des Fahrzeugumfeldes mit einer Bedienung bzw. Überwachung von Fahrzeugfunktionen verbunden werden kann.

Eine besonders intuitiv erfassbare Darstellung der Fahrzeugfunktionen liegt dann vor, wenn den jeweiligen Funktionen in der Umrissdarstellung des Fahrzeugs eine jeweilige Position fest zugeordnet ist. Hierdurch kann sich ein Benutzer leicht orientieren. Insbesondere dann, wenn eine intuitive Zuordnung der Darstellung einer Fahrzeugfunktion zu einem Ort innerhalb der Darstellung des Fahrzeugumrisses gewährleistet ist, kann sich ein Benutzer besonders leicht informieren. So ist es beispielsweise möglich, die Heckscheibenheizung in einem Bereich des Fahrzeughecks darzustellen, während eine Steuerung einer Klimaregelung für den Innenraum beispielsweise in einem Bereich eines Innenraums eines dargestellten Fahrzeugumrisses dargestellt wird.

Es ist vorteilhaft, eine erfindungsgemäße Steuereinrichtung in eine Navigationseinrichtung in einem Fahrzeug zu integrieren, da eine Navigationseinrichtung bei einer Führung des Fahrzeugs zu einem Fahrziel zumeist bereits über eine leistungsfähige Anzeigeeinrichtung im Fahrzeug verfügt, die auch zur Darstellung des Fahrzeugs in seiner Umgebung geeignet ist. Zudem kann die Steuereinrichtung auch zur Ansteuerung der Navigationseinrichtung und zur Berechnung einer Fahrtroute mit herangezogen werden. Ferner ist es damit auch möglich, durch eine Änderung des Maßstabes einen Übergang von einer Darstellung einer Umgebungskarte mit von der Umfelderfassungseinrichtung erfassten Hindernissen in der Umgebung des Fahrzeugs zur einer Darstellung eines Straßennetzes umzuschalten, in dem sich das Fahrzeug bewegt.

Es ist ferner vorteilhaft, das Fahrzeug in einem Zentrum der Anzeigendarstellung darzustellen, um unabhängig von einem gewählten Maßstab bei einer Vergrößerung eines zentralen Ausschnittes einer Anzeigendarstellung stets eine Zoommöglichkeit in das Fahrzeug und damit einen Zugriff auf die Fahrzeugfunktionen zu ermöglichen. In einer weiteren Ausführungsform kann dabei das Fahrzeug in der Anzeigendarstellung stets die gleiche Ausrichtung beibehalten, so dass bei einer Drehung des Fahrzeugs in seiner Umgebung in der Anzeigendarstellung die Umgebung gegenüber dem Fahrzeug gedreht wird. Bedienfunktionen können auf diese Weise ebenfalls stets in einer gleichen Ausrichtung innerhalb einer Umrissdarstellung des Fahrzeugs angezeigt werden.

Um einen Fahrer vor Gefahren warnen zu können, die sich aus Funktionszuständen des Fahrzeugs oder aus Hindernissen in einer Umgebung des Fahrzeugs ergeben könnten, werden für das Fahrzeug kritische Fahrzeugfunktionen und/oder Hindernisse in der Anzeigendarstellung hervorgehoben dargestellt, beispielsweise in einer Warnfarbe. Somit kann ein Benutzer der Anzeigendarstellung kritische Funktionen oder Hindernisse in der Anzeigendarstellung schnell erkennen. Wäre die entsprechende Funktion oder das entsprechende Hindernis in der gerade gewählten Maßstabs-Darstellung nicht sichtbar, so kann vorteilhaft ein entsprechendes Symbol angezeigt werden, um einen Benutzer zu einer Änderung des Maßstabes aufzufordern. Ist beispielsweise ein sehr großer Maßstab eingestellt und stellt ein Benutzer gerade Funktionen des Fahrzeugs ein, so kann ein entsprechender Hinweis ausgegeben werden, gemäß dem der Maßstab zu verkleinern ist, um ein Hindernis in der Umgebung des Fahrzeugs, das nunmehr als gefährlich gewertet wird, zu erkennen. Entsprechend ist es auch möglich, bei einer kritischen Fahrzeugfunktion den Benutzer aufzufordern, den Maßstab entsprechend zu vergrößern, um die kritische Fahrzeugfunktion in der Anzeigendarstellung sichtbar zu machen.

### Kurze Beschreibung der Zeichnungen

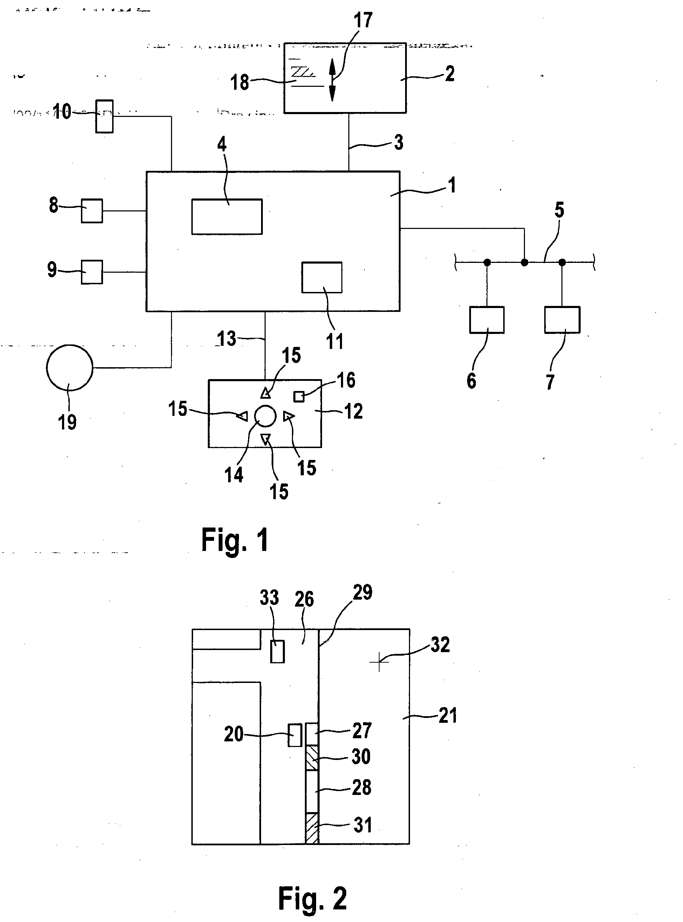

Ausführungsbeispiele der Erfindung sind in der Zeichnung dargestellt und in der nachfolgenden Beschreibung näher erläutert. Es zeigen Figur 1 eine erfindungsgemäße Steuereinrichtung, Figuren 2 bis 6 Ausführungsbeispiele für verschiedene Anzeigedarstellungen zur Erläuterung der Funktionsweise einer erfindungsgemäßen Steuereinrichtung und des erfindungsgemäßen Verfahrens zur Erzeugung einer Anzeigendarstellung.

### Ausführungsformen der Erfindung

In der Figur 1 ist eine Steuereinrichtung 1 dargestellt, die eine Anzeigeeinrichtung 2 über eine Schnittstelle 3 ansteuert. Die Anzeigeeinrichtung 2 ist beispielsweise als eine Anzeige in einer Mittelkonsole oder in einer Instrumententafel eines Kraftfahrzeugs ausgeführt. In einer weiteren Ausführungsform kann sie auch als ein Head-up-Display mit einer Darstellung eines virtuellen Bildes beispielsweise in einer Windschutzscheibe des Fahrzeugs ausgebildet sein. Die Steuereinrichtung 1 weist eine Recheneinheit 4 auf, die Informationen von Fahrzeugsystemen verarbeitet und diese Informationen zur Darstellung an die Anzeigeeinrichtung 2 weiterleitet. Hierzu ist die Steuereinrichtung 1 beispielsweise an einen Datenbus 5, beispielsweise an einen CAN-Bus, angeschlossen, um Informationen von Fahrzeugkomponenten abzufragen. Insbesondere ist die Steuereinrichtung 1 mit wenigstens einer Umfelderfassungseinheit 8 verbunden. Ferner kann sie auch mit mehreren Umfelderfassungseinheiten, beispielsweise mit einer weiteren Umfelderfassungseinheit 9, verbunden sein. Die Umfelderfassungseinheiten sind beispielsweise als eine Ultraschall-Abstandsmesseinrichtung, eine Kameraeinrichtung oder eine Radar-Messeinrichtung ausgeführt. Über die Umfelderfassungseinrichtungen können Hindernisse in einer Umgebung des Fahrzeugs erfasst werden. Die Recheneinheit 4 kann dabei erfassten Hindernissen eine Position in einer Umgebung des Fahrzeugs zuordnen. Ferner ist es, insbesondere bei einer Verwendung einer Radar-Messeinrichtung oder einer Video-Messeinrichtung auch möglich, die Geschwindigkeit von Hindernissen in einen Bezug zu einer Eigenbewegung des Fahrzeugs zu setzen. In einer weiteren Ausführungsform kann zudem die Steuereinrichtung 1 mit einer Wegmesseinrichtung 10 verbunden sein, die eine zurückgelegte Wegstrecke des Fahrzeugs misst. Insbesondere ortsfeste Hindernisse können dabei in einen Bezug zu einer Position des Fahrzeugs während einer Vorbeifahrt an diesen Hindernissen gesetzt werden.

Mittels des Wegsensors 10, der beispielsweise als ein Raddrehzahlsensor ausgeführt ist, kann zudem die Fahrzeugeigengeschwindigkeit bestimmt werden. Die Fahrzeuggeschwindigkeit kann einerseits als Fahrzeugfunktion dargestellt werden und kann andererseits für eine Berücksichtigung der Geschwindigkeit von Hindernissen in der Umgebung des Fahrzeugs und bei Kenntnis der Relativgeschwindigkeiten zwischen Fahrzeug und Hindernis herangezogen werden.

Die Steuereinrichtung 1 verfügt ferner über eine Speichereinheit 11, in der die Abmaße des Fahrzeugs abgelegt sind. Unter Rückgriff auf die Speichereinheit 11 kann die Recheneinheit 4 somit eine zumindest ungefähr maßstabsgerechte Darstellung des Fahrzeugs und der in der Umgebung des Fahrzeugs erfassten Hindernisse in der Anzeigendarstellung in der Anzeigeeinrichtung 2 erzeugen. Ein Maßstab dieser Darstellung kann über eine Eingabeeinheit 12 durch einen Benutzer verändert werden. Die Eingabeeinheit 12 ist über eine Schnittstelle 13 mit der Steuereinrichtung 1 verbunden.

Die Eingabeeinheit 12 weist in der hier dargestellten Ausführungsform einen Drehregler 14 auf, der insbesondere zur Veränderung eines Maßstabes vorgesehen ist. Ein Drehen des Drehreglers 14 in eine erste Richtung verkleinert hierbei den Maßstab. Ein Drehen in eine zweite Richtung vergrößert den Maßstab. Eine Drehachse des Drehreglers 14 kann dabei sowohl senkrecht zu einer Oberfläche der Eingabeeinheit 12, aber auch parallel zu einer Oberfläche eines Gehäuses verlaufen. Ferner ist es auch möglich, eine Maßstabsveränderung durch eine entsprechende Wipp-Taste zu realisieren.

Die Eingabeeinheit 12 kann ferner in einer Ausführungsform Pfeiltasten 15 aufweisen, die vorzugsweise zur Bedienung einer in einer Anzeigendarstellung dargestellten Anzeigemarke vorgesehen sind. Mit den Pfeiltasten 15 kann hierbei eine Funktion in der Anzeigendarstellung mittels der Anzeigenmarke angewählt werden. Um eine Funktion aufzurufen, kann zudem ein zusätzliches Bestätigungselement 16 vorgesehen sein. Eine Bestätigungsfunktionalität kann jedoch auch in den Drehregler 14 integriert sein. Beispielsweise kann eine Bestätigung mittels einer axialen Bewegung in Bezug auf die Drehrichtung des Drehreglers 14 erfolgen.

Um eine Maßstabsänderung für einen Betrachter transparent zu gestalten, kann eine Symbolik 17 zur Anzeige einer Maßstabsveränderung und/oder eine symbolische Darstellung 18 eines angezeigten Maßstabes in die Anzeigendarstellung integriert werden.

Um weitere Fahrzeugfunktionalitäten zu einer Anzeige bringen zu können, können an einen Datenbus 5 weitere Fahrzeugkomponenten 6, 7 angeschlossen sein, deren Zustände und/oder aufrufbare Funktionalitäten als Fahrzeugfunktionen an die Steuereinrichtung 1 zur Darstellung in der Anzeigeeinrichtung 2 übermittelt werden. Die Recheneinheit 4 entscheidet dann abhängig von einem gewählten Maßstab, welche Fahrzeugfunktionalitäten in der Anzeigendarstellung dargestellt werden. Bei der Darstellung ist eine erforderliche Lesbarkeit der Anzeigendarstellung durch einen Benutzer zu berücksichtigen. Eine Vorschrift, welche Funktionalitäten bei welchem eingestellten Maßstab in einer Anzeigendarstellung in der Anzeigeeinrichtung 2 dargestellt werden, kann beispielsweise in der Speichereinheit 11 abgelegt sein.

In einer weiteren Funktion kann zudem die Steuereinrichtung 1 über den Datenbus 5 feststellen, ob das Fahrzeug steht oder ob das Fahrzeug fahrbereit ist. Eine Darstellung von Funktionen kann dann in Abhängigkeit davon erfolgen, ob das Fahrzeug steht oder nicht. Gegebenenfalls können damit Darstellungen von Funktionen, die während einer Fahrt nicht zulässig sind, wie beispielsweise eine Darstellung bewegter Bilder, automatisch unterbunden werden.

In einer weiteren Ausführungsform kann die Steuereinrichtung 1 auch auf eine Kartendatenbasis 19 einer Navigationseinrichtung zugreifen. Hierdurch ist es möglich, Straßen-Umgebungsinformationen auch dann in eine Umgebungsdarstellung des Fahrzeugs einzutragen, wenn eine entsprechende Umgebung, beispielsweise ein Bereich vor dem Fahrzeug, noch nicht durch eine Umfelderfassungseinheit des Fahrzeugs abgetastet wurde. Damit kann eine Umgebungsdarstellung des Fahrzeugs ergänzt und/oder verifiziert werden. Wird z. B. ein Straßenverlauf durch eine Umfelderfassungseinrichtung nur eingeschränkt erfasst, so können fehlende Verlaufsdaten durch Zugriff auf die Kartendatenbasis 19 der Navigationseinrichtung ergänzt werden, in der die Daten eines Straßennetzes abgelegt sind.

In den Figuren 2 bis 5 sind Anzeigedarstellungen in verschiedenen Maßstäben dargestellt. In der Figur 2 ist eine erste Anzeigendarstellung 21 in einem größeren, ersten Maßstab dargestellt. Das Fahrzeug 20 ist in einem Straßenverlauf 26 dargestellt, der beispielsweise durch einen Zugriff auf die Kartendatenbasis 19 ermittelt wurde. Durch eine Abstandsmesseinrichtung konnten die Positionen von Hindernissen 27, 28 ermittelt werden, die an einem rechten Straßenrand 29 positioniert sind. Zwischen den Hindernissen 27, 28 konnte beispielsweise ein an einer Seite des Fahrzeugs 20 angeordneter Ultraschallsensor Bereiche 30, 31 ermitteln, in denen sich kein Hindernis befindet. Die Bereiche 30, 31 werden entsprechend hervorgehoben dargestellt. Der Bereich 30 wird dabei in einer ersten Weise dargestellt, beispielsweise in rot, um anzuzeigen, dass der Bereich 30 für ein Einparken nicht ausreichend groß ist. Der Bereich 31 wird beispielsweise in grün dargestellt, um dem Fahrer des Fahrzeugs 20 anzuzeigen, dass dieser Bereich für ein Einparken groß genug wäre. Über eine Anzeigemarke 32, die ein Benutzer in der Anzeigendarstellung 21 bewegen kann, kann er nunmehr beispielsweise den Bereich 30 oder den Bereich 31 anwählen, um sich nähere Informationen zu den Freiräumen anzeigen zu lassen, beispielsweise um zu erfahren, welche Parklücken-Abmaße hier erfasst worden sind.

Über eine Radareinrichtung kann ferner das Fahrzeug 20 ein vorausfahrendes Fahrzeug 33 erfassen, das ebenfalls in der Umgebungsdarstellung des Fahrzeugs 20 dargestellt wird. Ferner ist es möglich, dass eine radarbasierte Regelung eines abstandsabhängigen Folgefahrens auf das Fahrzeug 33 gerichtet wird. In diesem Fall wird eine Darstellung des Fahrzeugs 33 in der Anzeigeeinrichtung hervorgehoben, um dem Fahrer anzuzeigen, dass das abstandsgeregelte Folgefahren nunmehr auf dieses Zielobjekt geregelt hat und eine Einhaltung eines vorgegebenen, geschwindigkeitsabhängigen Abstands zu diesem vorausfahrenden Fahrzeug automatisch erfolgt.

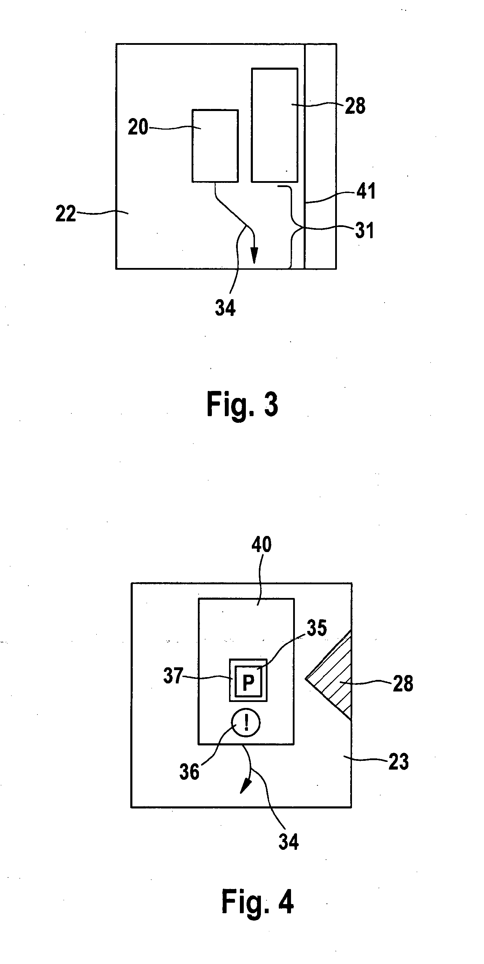

Eine Situation mit einem vergrößerten Maßstab ist in der zweiten Anzeigendarstellung 22 in der Figur 3 dargestellt. Der Fahrer hat sein Fahrzeug nun zu dem Hindernis 28 zurückbewegt, um in den freien Bereich 31 einparken zu können. In der Nähe des Hindernisses 28 hat er nunmehr einen vergrößerten Maßstab gewählt. In dem vergrößerten Maßstab wird neben dem Hindernis 28 und dem Straßenrand 41 nunmehr auch ein Einparkweg 34 eingezeichnet, gemäß dem der Fahrer das Fahrzeug 20 in den Parklückenbereich 31 führen kann.

In der Figur 4 ist eine dritte Anzeigendarstellung 23 dargestellt, gemäß der der Maßstab gegenüber der Darstellung in der Figur 3 nochmals vergrößert wurde. Das Fahrzeug 20 wurde von dem Fahrer nunmehr teilweise in die Parklücke 31 geführt. Bei der hier gewählten Darstellung sind zwei Fahrzeugfunktionen innerhalb des Umrisses des Fahrzeugs 20 dargestellt. Ein erstes Funktionssymbol 35 bezeichnet einen Aufruf einer automatischen Einparkunterstützung. Ein weiteres Symbol 36 bezeichnet einen Abbruch einer automatischen Einparkunterstützung. Die entsprechenden Funktionen können durch eine Verschiebung eines Auswahlrahmens 37 angewählt und durch eine nachfolgende Bestätigung aufgerufen werden. Neben den hier beispielhaft dargestellten Funktionalitäten können innerhalb des Umrisses des Fahrzeugs auch andere Funktionen dargestellt werden. Ein Fahrer kann nunmehr, falls er dies wünscht, durch ein Aufrufen der automatischen Einparkunterstützung den weiteren Einparkvorgang der automatischen Einparkunterstützung des Fahrzeugs 20 überlassen. Eine Fahrtrichtung des Fahrzeugs für den Einparkvorgang entlang des Einparkwegs 34 ist auch in der Figur 4 dargestellt. Ebenso ist das Hindernis 28 noch teilweise dargestellt. Da sich das Fahrzeug 20 unterhalb eines vorgegebenen Abstandes an das Hindernis 28 angenähert hat, wird das Hindernis 28 in der hier gezeigten Darstellung in einer Warnfarbe dargestellt, beispielsweise in rot.

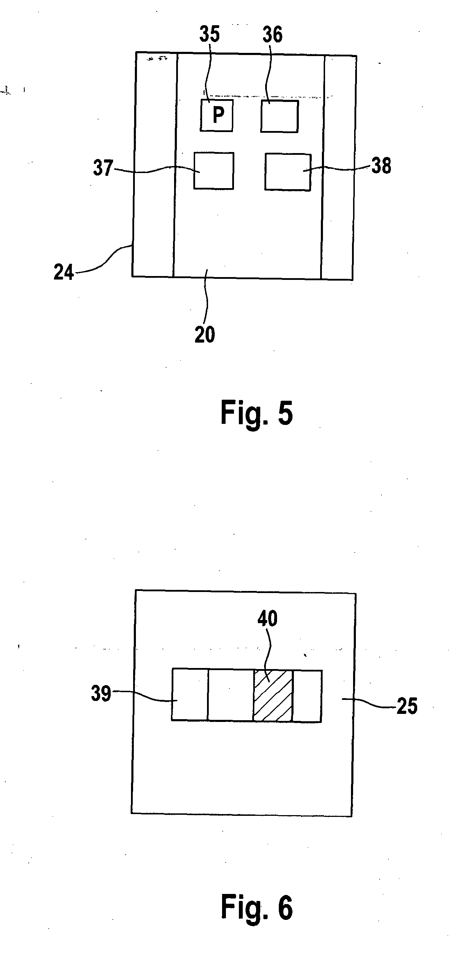

Bei der vierten Anzeigendarstellung 24 in der Figur 5 ist das Fahrzeug 20 weiter vergrößert dargestellt. Hindernisse in der Umgebung des Fahrzeugs 20 sind nun aufgrund des großen Vergrößerungsfaktors nicht mehr erkennbar. Dafür sind neben der Einparkunterstützung 35 weitere Funktionalitäten 36, 37, 38 innerhalb des Umrisses des Fahrzeugs 20 in der Anzeigendarstellung 24 symbolisch dargestellt. Diese Funktionen können beispielsweise lediglich die Anzeige von Fahrzeugzuständen umfassen, beispielsweise einen Tankfüllstand, eine Fahrzeuggeschwindigkeit oder eine Reichweite des Fahrzeugs. Darüber hinaus ist es aber auch möglich, Fahrzeugfunktionen, wie beispielsweise ein Radio oder eine Klimaregelung, über einen entsprechenden Aufruf des Symbols der Komponente zu steuern. Für eine Auswahl von Funktionen kann es mitunter vorteilhaft sein, für die einzelnen Hauptfunktionen weitere Unterfunktionen bereitzustellen.

Bei einer weiteren Vergrößerung gemäß der fünften Anzeigendarstellung 25 in der Figur 6 können zu den einzelnen Funktionen in der Figur 5 bei einer ausreichenden Vergrößerung jeweils Unterfunktionen 39 dargestellt werden. Um zwischen einer Vergrößerung eines jeweiligen Funktionspunktes in der Figur 5 auswählen zu können, kann die Position eines Zentrums der Anzeigeeinrichtung, das als Koordinatenmittelpunkt während des Vergrößerungsvorgangs unverändert bleibt, mittels der Pfeiltasten 15 oder eines anderen, geeigneten Bedienelements auch verschoben werden. Zwischen den Unterfunktionen kann beispielsweise durch eine Verschiebung einer Anzeigemarke 40 gewechselt werden.

Um eine intuitive Erfassbarkeit bei der Bedienung der Fahrzeugfunktionen zu ermöglichen, kann ein Funktionsfenster an einer Stelle im Fahrzeug dargestellt werden, an der sich tatsächlich auch zumindest ungefähr die jeweilige Funktionskomponente im Fahrzeug befindet. So kann eine Reifendrucküberwachung im Bereich der Fahrzeugreifen oder eine Radioansteuerung oder eine Klimaansteuerung im Bereich einer Instrumententafel des Fahrzeugs, vorgesehen sein.

Für einen Diagnosemodus, der vorzugsweise nur während eines Fahrzeugstillstandes ausführbar ist, kann nicht nur eine zweidimensionale Bewegung innerhalb des Fahrzeugs, sondern quasi eine räumliche Bewegung innerhalb einer Fahrzeugdarstellung ermöglicht werden. Hierdurch können beispielsweise Steuergeräteinformationen abgerufen werden, wobei ein Benutzer durch eine entsprechende Navigation einen Ort innerhalb der Fahrzeugdarstellung aufsucht, an der das entsprechende Steuergerät montiert ist. Wird das entsprechende Steuergerät angewählt, so können Daten über dieses Steuergerät in die Anzeigendarstellung eingeblendet werden. Durch eine weitere Vergrößerung können weitere Detaildaten abgerufen werden.

## Patentansprüche

1. Steuereinrichtung (1) zur Erzeugung einer Anzeigedarstellung eines Fahrzeugs (20), mit einer Schnittstelle zu wenigstens einer Umfelderfassungseinrichtung (8, 9) zur Erfassung von Hindernissen in einer Umgebung des Fahrzeugs, mit einer Recheneinheit (4) zur Eintragung der erfassten Hindernisse und des Fahrzeugs in die Anzeigedarstellung und mit einer Schnittstelle zur einer Anzeigeeinrichtung (2) zur Erzeugung einer Ausgabe der erzeugten Anzeigedarstellung mit einer Schnittstelle zu einer Bedieneinheit (12) zur Veränderung eines Maßstabes der Anzeigedarstellung durch einen Benutzer, **dadurch gekennzeichnet, dass** die Anzeigedarstellung in Abhängigkeit von dem gewählten Maßstab Darstellungen (35, 36, 37, 38) von Fahrzeugfunktionen zur Auswahl einer jeweiligen Fahrzeugfunktion an einer der jeweiligen Fahrzeugfunktion zugeordneten Position innerhalb der Darstellung (20) des Fahrzeugs in der Anzeigedarstellung umfasst und dass in Abhängigkeit von dem gewählten Maßstab zu einer Fahrzeugfunktion Unterfunktionen dargestellt sind.

2. Navigationseinrichtung in einem Kraftfahrzeug mit einer Steuereinrichtung nach einem der vorhergehenden Ansprüche.

3. Verfahren zur Erzeugung einer Anzeigedarstellung eines Fahrzeugs, wobei Hindernisse in einer Umgebung des Fahrzeugs erfasst werden, wobei die erfassten Hindernisse und das Fahrzeug in die Anzeigedarstellung eingetragen werden, wobei ein Maßstab der Anzeigedarstellung durch einen Benutzer verändert wird, **dadurch gekennzeichnet, dass** in Abhängigkeit von dem gewählten Maßstab Funktionen des Fahrzeugs innerhalb der Darstellungsfläche des Fahrzeugs in der Anzeigendarstellung angezeigt werden, die zur Auswahl einer jeweiligen Fahrzeugfunktion dienen und dass in Abhängigkeit von dem gewählten Maßstab zu einer Fahrzeugfunktion Unterfunktionen dargestellt werden.

4. Verfahren nach Anspruch 3, **dadurch gekennzeichnet, dass** ein Fahrzeug in einem vorgegebenen Zentrum der Anzeigedarstellung dargestellt wird.

5. Verfahren nach einem der Ansprüche 3-4, **dadurch gekennzeichnet, dass** Hindernisse, die aufgrund ihrer Lage zu dem Fahrzeug eine Reaktion des Fahrers erfordern, und/oder Fahrzeugfunktionen, die aufgrund ihres Zustandes eine Reaktion des Fahrers erfordern, hervorgehoben in die Anzeigedarstellung eingetragen werden.

## Claims

1. Control device (1) for producing a display presentation of a vehicle (20), having an interface to at least one surroundings sensing device (8, 9) for sensing obstacles in surroundings of the vehicle, having a computation unit (4) for entering the sensed obstacles and the vehicle into the display presentation and having an interface to a display device (2) for producing an output from the display presentation produced having an interface to an operator control unit (12) for a user to alter a scale of the display presentation, **characterized in that** the display presentation comprises, on the basis of the chosen scale, presentations (35, 36, 37, 38) of vehicle functions for the selection of a respective vehicle function at a position - associated with the respective vehicle function - within the presentation (20) of the vehicle in the display presentation and **in that** the chosen scale is taken as a basis for presenting subfunctions for a vehicle function.

2. Navigation device in a motor vehicle having a control device according to the preceding claim.

3. Method for producing a display presentation of a vehicle, wherein obstacles in surroundings of the vehicle are sensed, wherein the sensed obstacles and the vehicle are entered into the display presentation, wherein a scale of the display presentation is altered by a user, **characterized in that** the chosen scale is taken as a basis for displaying functions of the vehicle within the presentation area of the vehicle in the display presentation that are used for the selection of a respective vehicle function and **in that** the chosen scale is taken as a basis for presenting subfunctions for a vehicle function.

4. Method according to Claim 3, **characterized in that** a vehicle is presented in a prescribed centre of the display presentation.

5. Method according to either of Claims 3 - 4, **characterized in that** obstacles that, on account of their situation relative to the vehicle, require a reaction by the driver and/or vehicle functions that, on account of their state, require a reaction by the driver are entered into the display presentation in highlighted form.

## Revendications

1. Dispositif de commande (1) pour générer une représentation d'affichage d'un véhicule (20), comprenant une interface avec au moins un dispositif de détection de l'environnement (8, 9) pour détecter des obstacles dans un environnement du véhicule, comprenant une unité de calcul (4) pour entrer les obstacles détectés et le véhicule dans la représentation d'affichage et comprenant une interface avec un dispositif d'affichage (2) pour générer une sortie de la représentation d'affichage générée, avec une interface avec une unité de commande (12) pour permettre à un utilisateur de modifier une échelle de la représentation d'affichage, **caractérisé en ce que** la représentation d'affichage, en fonction de l'échelle sélectionnée, comprend des représentations (35, 36, 37, 38) de fonctions de véhicule pour la sélection d'une fonction de véhicule respective au niveau d'une position associée à la fonction de véhicule respective à l'intérieur de la représentation (20) du véhicule dans la représentation d'affichage, et **en ce qu'**en fonction de l'échelle sélectionnée pour une fonction de véhicule, des fonctions secondaires sont représentées.

2. Dispositif de navigation dans un véhicule automobile comprenant un dispositif de commande selon la revendication précédente.

3. Procédé pour générer une représentation d'affichage d'un véhicule, dans lequel des obstacles dans un environnement du véhicule sont détectés, les obstacles détectés et le véhicule sont entrés dans la représentation d'affichage, une échelle de la représentation d'affichage est modifiée par un utilisateur, **caractérisé en ce qu'**en fonction de l'échelle sélectionnée, des fonctions du véhicule sont affichées dans la représentation d'affichage à l'intérieur de la surface de représentation du véhicule, lesquelles fonctions servent à sélectionner une fonction de véhicule respective, et **en ce qu'**en fonction de l'échelle sélectionnée pour une fonction de véhicule, des fonctions secondaires sont représentées.

4. Procédé selon la revendication 3, **caractérisé en ce qu'**un véhicule est représenté dans un centre prédéfini de la représentation d'affichage.

5. Procédé selon l'une quelconque des revendications 3 à 4, **caractérisé en ce que** des obstacles, qui, du fait de leur position par rapport au véhicule, requièrent une réaction du conducteur, et/ou des fonctions du véhicule, qui, du fait de leur état, requièrent une réaction du conducteur, sont entrés de manière à être mis en valeur dans la représentation d'affichage.
